# EUROPÄISCHE PATENTSCHRIFT

(11) **EP 2 915 429 B1**
(45) Veröffentlichungstag und Bekanntmachung des Hinweises auf die Patenterteilung: **09.01.2019**
(21) Anmeldenummer: 14157728.8
(22) Anmeldetag: 04.03.2014
(51) Int. Cl.: A23C 19/00, A23C 19/086, A23J 1/20, A23J 3/22, A23C 9/137, A23C 19/05, A23C 19/068, A23C 19/08, A23C 21/02, A23C 1/00

(54) **Proteinmasse zur Verwendung als Käseersatzstoff**
Protein mass to be used as a cheese surrogate
Mass du protéine pour utilisation comme une succédané du fromage

(43) Veröffentlichungstag der Anmeldung: 09.09.2015
(73) Patentinhaber: DMK Deutsches Milchkontor GmbH, 27404 Zeven (DE)
(72) Erfinder: Zink, Ralf, 26129 Oldenburg (DE)
(74) Vertreter: Fabry, Bernd

(56) Entgegenhaltungen:
- EP-A2- 1 825 758
- CA-A1- 1 169 698

## Beschreibung

### GEBIET DER ERFINDUNG

Die Erfindung befindet sich auf dem Gebiet der Nahrungsmittel und betrifft eine Proteinmasse auf Basis von Milchprodukten, die als Käseersatzstoff angeboten werden kann.

### STAND DER TECHNIK

**Käse** ist ein festes Milcherzeugnis, das - bis auf wenige Ausnahm durch Gerinnen aus einem Eiweißanteil der Milch, dem Kasein, gewonnen wird. Es ist das älteste Verfahren zur Haltbarmachung von Milch und deren Erzeugnissen. Da neuhochdeutsche Wort "Käse" geht über mhd. *kæse,* ahd. *ka̅si* auf lat. *ca̅seus,* eigentlich: "Gegorenes, sauer Gewordenes", zurück, das u. a. auch dem engl. *cheese* und dem span. *queso* zu Grunde liegt.

Von 2001 bis 2012 ist der Prokopfverbrauch von Käse - bezogen über alle Sorten - in Deutschland von 21,1 auf 23,3 kg angezogen. Ein ähnlicher Trend lässt sich auch für die EU, Nordamerika sowie Australien und Neu Seeland - die Staaten in der Welt, mit der längsten Käsetradition - aufzeigen. Käse mit seinen mannigfaltigen Erscheinungsformen gehört damit in der westlichen Hemisphäre zu den wichtigsten und umsatzstärksten Lebensmitteln überhaupt.

Dem kommt Käse im asiatischen Raum bis heute eine Sonderstellung zu, obwohl beispielsweise in Japan der Käsekonsum in den letzten Jahren stetig zugenommen hat und in 2011 immerhin 2,4 kg pro Kopf betragen hat. Die Gründe dafür sind vielfältiger Natur: Zum einen gibt es in Asien schlicht keine Käsekultur, die mit der in Mitteleuropa beispielsweise zu vergleichen wäre. Das vielfach angeführte Argument, Asiaten würden Käse als ein verdorbenes Milchprodukt ansehen und den Verzehr ablehnen, trifft dabei kaum zu - insbesondere wenn man sich vor Augen führt, dass Asiaten deutlich weniger Abneigung gegen eher ausgefallene Nahrungsmittel zeigen, als das in Europa oder den USA der Fall ist. Eher noch mag das Argument verfangen, dass Asiaten in höherem Maße eine Lactoseintoleranz zeigen als Mitteleuropäer.

Das Dokument CA 1169 698 A1 offenbart ein Verfahren zur Herstellung von pasteurisiertem Käseersatzstoff in Pulverform, umfassend die folgenden Schritte: Bereitstellen einer kolloidalen Milchzubereitung mit einem hohen Protein/Lactose und Protein/Calcium Verhältnis (mindestens doppelt so hohe wie Rohmilch) sowie einem pH-Wert von 5.0-5.5; Alkalisieren und Pasteurisieren der so erhaltenen Lösung, sowie Erneutes Ansäuern der Lösung und dann Herstellen eines trockenen Pulvers. Wird das Pulver in Wasser aufgelöst, wird ein Käseersatzstoff erhalten, der in seiner Textur Mozzarella ähnelt.

Das Dokument EP 1 825 758 A2 beschäftigt sich mit einem Verfahren zur Herstellung eines Käseproduktes, wobei eine Mischung aus hochwertigem Proteinpulver, Milchpulver und Salz mit Wasser und anderen alternativen Zusatzstoffen hergestellt wird, zur Gewinnung eines Zwischenprodukts, und dem so erhaltenen Zwischenprodukt Wasser, Fettstoffe, andere Milcherzeugnisse und geeignete Emulgatoren zugegeben und bei einer Temperatur von 150 bis 250 °F (65 bis 121 °C) verarbeitet werden, um ein Käseprodukt zu erhalten, das eine glatte Textur aufweist.

Nichtsdestotrotz gibt es für Unternehmen, die im asiatischen Raum Käse vermarkten wollen hohe Eintrittsschwellen, obgleich der Markt ein sehr großes Potential verspricht. Daraus ergibt sich als erste Teilaufgabe, die der vorliegenden Erfindung zugrunde liegt, die Frage, wie man Käse oder ein käseähnliches Produkt für den asiatischen Markt, speziell den Markt in China, Korea und Japan gestalten kann, so dass er vom Verbraucher angenommen wird.

Ein weiteres Problem und damit ein weiterer Teil der vorliegenden Erfindung, mit dem sich Milch- und Käsehersteller in Asien beschäftigen müssen, besteht in der Aufgabe, qualitativ einwandfreie Produkte zur Verfügung zu stellen, die über eine lange Zeit lagerstabil sind, ohne ihre Genussqualitäten einzubüßen, und zum anderen in kürzester Zeit tatsächlich verzehrbereit zu sein.

Die Aufgabe der vorliegenden Erfindung hat somit darin bestanden, die beiden eingangs geschilderten Teilaufgaben zu verbinden und eine Lösung zur Verfügung zu stellen, die das Gesamtproblem voll umfänglich löst.

### BESCHREIBUNG DER ERFINDUNG

Gegenstand der Erfindung ist eine Proteinmasse zur Verwendung als Käseersatzstoff, die dadurch erhältlich ist, dass man
(a) Milchprodukte ausgewählt aus der Gruppe, die gebildet wird von Sauermilch, Dickmilch, Joghurt, Kefir, Quark oder Sauermolke bis auf eine Restfeuchte von 0,5 bis 5 Gew.-% entwässert,
(b) der so erhaltenen getrockneten Masse Aroma- und/oder Farbstoffe sowie gegebenenfalls weitere Nahrungsmittelzusatzstoffe zugibt und
(c) die so erhaltene Mischung mit Wasser oder Dampf bei 50 bis 150 °C aufquellen lässt.

Ein weiterer Gegenstand der Erfindung betrifft ein Verfahren zur Herstellung einer Proteinmasse mit Käsetextur, bei dem man
(a) Milchprodukte ausgewählt aus der Gruppe, die gebildet wird von Sauermilch, Dickmilch, Joghurt, Kefir, Quark oder Sauermolke bis auf eine Restfeuchte von 0,5 bis 5 Gew.-% entwässert,
(b) der so erhaltenen getrockneten Masse Aroma- und/oder Farbstoffe sowie gegebenenfalls weitere Nahrungsmittelzusatzstoffe zugibt und
(c) die so erhaltene Mischung mit Wasser oder Dampf aufquellen lässt.
wobei der letzte Schritt bei Temperaturen im Bereich von 50 bis 150 °C erfolgt.

Überraschenderweise wurde gefunden, dass durch die oben geschilderte Kombination der Schritte (a), (b) und (c) auf einfache Weise die geschilderte Aufgabe voll umfänglich gelöst wird.

Ein besonderer Vorteil der vorliegenden Erfindung besteht darin, dass man die Proteinmassen in gängige Küchengeräten, wie einem Vakuumgarer, einem Thermomixgerät oder einem Druckkochtopf herstellen kann, wobei Schritt (c) bei einem Druck im Bereich von 0,1 bis 1 bar oder von 1 bis 5 bar erfolgt.

### EINSATZSTOFFE

Milch ist eine weißliche, undurchsichtige Lösung oder kolloidale Dispersion von Proteinen, Lactose und Milchfett in Wasser. Gebildet wird sie in den Milchdrüsen der Säugetiere, die damit ihre Neugeborenen nähren. Im Rahmen der vorliegenden Erfindung werden Säuerungs- oder Fermentationsprodukte der Milch oder Säuerungs- oder Fermentationsprodukte von Milchprodukten als Ausgangsstoffe genutzt.

### Sauer- oder Dickmilch

Ein Einsatzstoff ist Sauer- oder Dickmilch. Diese wird in der Regel aus pasteurisierter Milch hergestellt, indem man diesen Bakterienkulturen zugibt, die Milchzucker in Milchsäure umwandeln. Alternativ kann man Enzyme oder Säuren zugeben. In der Folge wird das Casein ausgefällt, was zu einer Zunahme der Viskosität führt (Dicklegung). Dabei kommen vorzugsweise mesophile Streptokokken-Kulturen, wie z.B. *Stretococcus lactis* oder *Streptococcus cremoris* zum Einsatz, die ein Temperaturoptimum im Bereich von 22 bis 28 °C aufweisen. Der Milchansatz wird dann anschließend bei Temperaturen von 25 bis 28 °C über 15 bis 20 Stunden dickgelegt.

### Joghurt

Ein weiterer Einsatzstoff ist Joghurt. Bei Joghurt handelt es sich um durch bakteriell verdickte Milch; das Produkt besitzt einen säuerlichen Geschmack. Die Herstellung von Joghurt stellt eine Fermentation dar: Milchsäurebakterien wandeln Lactose in Milchsäure um, wobei zugleich der charakteristische Geschmack und das Aroma entstehen. Im Gegensatz zur Herstellung von Sauer- oder Dickmilch werden bei der Joghurtherstellung thermophile Kulturen eingesetzt, die ein Aktivitätsoptimum bei 40 bis 44 °C aufweisen. Typische Vertreter sind *Streptococcus thermophilus, Lactobacillus bulgaricus, Bifidobacterium* sowie *Lactobacillus acidophilus, die* als Reinkultur oder gemischt eingesetzt werden. Diese bilden überwiegend rechtsdrehende L(+)-Milchsäure. Diese ist die für Menschen geeignetere physiologische Form und wird durch ein spezifischesEnzym, die L(+)-Lactatdehydrogenase, schneller abgebaut.

Die Milchsäure führt zu einer pH-Absenkung. Ab einem bestimmten pH-Wert können sich die Caseinmicellen nicht mehr in Lösung halten und koagulieren unter Bildung eines Netzwerkes. In den Zwischenräumen werden das in der Milch enthaltene Wasser und verbleibende Proteinfraktionen (Molke) eingeschlossen. Die Säuerung muss während des gesamten Produktionsprozesses überwacht werden, dazu wird der pH-Wert der Kesselmilch gemessen. Die Dicklegung der Milch beginnt ab einem pH-Wert von ca. 5,5 und endet je nach Kultur bei einem pH-Wert bis 3,8. Idealerweise sollte bei einem pH-Wert von 4,65 (isoelektrischer Punkt) die Säuerung beendet sein, da sonst Molkensynärese entsteht, wobei sich der Joghurt bei niedrigeren pH-Werten zusammenzieht und Molke abscheidet.

### Kefir

Ein weiterer Einsatzstoff ist Kefir. Kefir (vom türkischsprachigen Wort *köpürmek* "schäumen") ist ein dickflüssiges, kohlensäure- und leicht alkoholhaltiges Milchgetränk, das ursprünglich aus dem Nordkaukasus und Tibet stammt. Kefir entsteht durch einen Gärungsprozess, typischerweise durch Milchsäurebakterien wie *Lactococcus lactis* und *Lactobacillus acidophilus,* Hefen wie *Kluyveromyces marxianus* und sowie Essigsäurebakterien. Kefir ist neben Choormog eines der wenigen Milchprodukte, bei deren Herstellung Hefe eingesetzt wird.

Milchkefir entsteht, indem man Kefirknollen (einen Pilz, der aus Bakterien, Hefen, Proteinen, Lipiden und Polysacchariden, besteht, die durch verschiedene der in den Knollen enthaltenen Bakterien produziert werden) ein bis zwei Tage mit Kuh-, Ziegen- oder Schafsmilch versetzt. Auch die Verwendung von Stutenmilch ist möglich, das Produkt heißt dann Kumys; selbst Kokosmilch ist für die Herstellung von Kefir geeignet. Der Ansatz wird daraufhin stehengelassen. Viele Anleitungen sehen das einmalige Umrühren nach einigen Stunden vor. Optimale Temperaturen liegen zwischen 10 °C und 25 °C. Dabei wird die Milch fermentiert. Der Alkoholgehalt des fertigen Produkts kann je nach Gärdauer von 0,2 bis maximal etwa 2 Gew.-% betragen. Bei niedrigeren Temperaturen überwiegt die Hefegärung und das Produkt enthält mehr Kohlendioxid und Ethanol sowie weniger Milchsäure. Bei höheren Temperaturen ist die Milchsäuregärung bevorzugt und der Ethanol-Gehalt ist geringer, der Milchsäure-Gehalt höher. Fett- und Eiweißgehalt entsprechen etwa dem der verwendeten Milch. Das cremige Getränk hat einen leicht säuerlichen Geschmack. Der Kefir wird mit einem Sieb unter leichtem Schütteln von den blumenkohlartigen Kefirknollen getrennt, die anschließend mit kaltem Wasser gespült werden und danach für den nächsten Ansatz weiterverwendet werden können.

Industriell hergestellter und im Handel angebotener Kefir entspricht üblicherweise nicht dem traditionell mit Kefirknollen hergestellten Getränk und hat die Bezeichnung "Kefir, mild". Damit das entstehende Getränk immer den gleichen Geschmack besitzt, wird industriell mit einer definierten Mischung verschiedener Bakterien und Hefen gearbeitet, die die komplexe Zusammensetzung des Mikroorganismen-Konsortiums von Kefirknollen nicht vollständig nachahmen können. Traditioneller Kefir besitzt eine regionale Zusammensetzung, die sich jahreszeitlich verändern kann. "Kefir, mild" enthält in der Regel keinen Alkohol, dafür aber pro 100 g noch ca. 2,7-3,9 g Laktose und ist somit bei Laktoseunverträglichkeit nicht geeignet. Dagegen enthält der echte Kefir Alkohol, ist aber laktosefrei.

### Quark

Ein weiterer Einsatzstoff ist Quark. Quark, auch Weißkäse genannt, bayrisch als Topfen oder österreichisch als Schotten bezeichnet, ist ein Frischkäse, der ebenfalls als alternatives Ausgangsprodukt für die erfindungsgemäßen Proteinmassen in Frage kommt. In Deutschland wird Quark fast ausschließlich aus pasteurisierter Milch hergestellt. Quark ist ein Sauermilchkäse. Anders als bei den Süßmilchkäsen erfolgt die Gerinnung nicht durch die Zugabe von Lab, sondern durch Milchsäure (zum Beispiel: Milchsäurebakterien, Käsereisauer) oder Säure (zum Beispiel: Zitronensäure oder Essigsäure). Vorzugsweise werden dazu pasteurisierter Magermilch Milchsäurebakterien zugesetzt. Diese setzen einen Teil der Laktose in Milchsäure um. Mit der Zunahme von Milchsäure sinkt der pH-Wert der Milch allmählich ab. Wenn er einen bestimmten Wert unterschreitet, fällt das Casein aus und man erhält die so genannte "Dickete". Dieser Vorgang nimmt 30 Minuten bis zwei Stunden in Anspruch, und die Temperatur beim Dicklegen variiert zwischen 21 und 35 °C. Mechanisch - durch Abtropfenlassen in einem Tuch oder bei industrieller Herstellung durch Zentrifugieren- wird die Dickete in ihre festen (hier nur das geronnene Kasein) und flüssigen (die Molke mitsamt den in der Flüssigkeit gelösten Molkenproteinen) Bestandteile geteilt. Der Käsebruch wird durch Siebe fein passiert und je nach gewünschtem Fettgehalt zusätzlich mit Sahne versehen. Industriell erfolgt die Quarkherstellung auch mittels Ultrafiltration oder die Tieftemperatursäuerung.

### Sauermolke

Ein weiterer Einsatzstoff ist Sauermolke. Sauermolke oder auch nur Molke (auch Käsewasser, Sirte oder Schotte) genannt, stellt ein geeignetes Ausgangsmaterial zur Herstellung der erfindungsgemäßen Proteinmassen dar.Es handelt sich um eine wässrige grünlichgelbe Restflüssigkeit, die bei der Herstellung von Milchprodukten weltweit in einer Menge von ca. 82 Milliarden Tonnen pro Jahr anfällt. Sie besteht zu 94% aus Wasser, zu 4 bis 5% aus Milchzucker und ist nahezu fettfrei. Es gibt zwei Sorten Molke: die Süßmolke (auch Labmolke), die entsteht, wenn man Milch mit Lab zur Käseherstellung dick legt. Sauermolke entsteht, wenn man die Milch mit Milchsäurebakterien behandelt. Nachdem das Eiweiß als Käse oder Quark abgetrennt ist, verbleibt die Molke und stellt in der Regel ein Abfallprodukt dar. Molke enthält neben Milchsäure, noch Vitamine B1, B2 und B6 sowie Kalium, Calcium, Phosphor und andere Mineralstoffe, doch vor allem bis 1 Gew.-% Molkenprotein.

### ENTWÄSSERUNG

Die Entwässerung der Milchprodukte, die als Ausgangsstoffe für die erfindungsgemäßen Proteinmassen dienen, können nach den Standardverfahren der technischen Industrie, speziell der Nahrungsmitteltechnologie vom Wasser befreit und so getrocknet werden. Voraussetzung ist, dass die Verfahren schonend verlaufen und die Proteine nicht denaturieren oder zerstört werden. Als Beispiele für geeignete Verfahren seien die Sprühtrocknung und vor allem die Gefriertrocknung (Lyophilisierung) genannt. Den Ausgangsstoffen kann das Wasser auch schonend in Eindampfvorrichtungen, beispielsweise Rührgeräten, die unter Vakuum arbeiten, oder Rotationsverdampfern entzogen werden.

Dabei weisen die entwässerten Produkte noch eine Restfeuchte von 0,5 bis 5 Gew.-%, vorzugsweise 0,5 bis 4 Gew.-% und insbesondere von etwa 1 bis etwa 3 Gew.-% auf.

### AROMASTOFFE

Die Auswahl der Aromastoffe zur Beimischung zu den erfindungsgemäßen Proteinmassen ist unkritisch und wird ausschließlich durch die beabsichtigte Verwendung bestimmt.

Typische Beispiele für Aromen umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Besonders bevorzugt sind Aromen mit einer seetierischen oder algenartigen Ausstrahlung, wie beispielsweise Alkylpyridine. Diese verleihen den Proteinmassen einen "Sushi-Geschmack", der gerade in asiatischen Breiten sehr geschätzt wird.

### FARBSTOFFE

Lebensmittelfarbstoffe oder kurz Farbstoffe sind Lebensmittelzusatzstoffe zum Färben von Lebensmittel. Ihre Auswahl ist im vorliegenden fall ebenfalls unkritisch und wird durch den beabsichtigten Einsatzzweck geprägt. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### WEITERE NAHRUNGSMITTELZUSATZSTOFFE

Die erfindungsgemäßen Proteinmasse können neben den Aroma- und Farbstoffen weitere Inhaltsstoffe aufweisen, wie z.B. Süßstoffe, Lebensmittelsäuren, Säureregulatoren, Verdickungsmittel, Prebiotics, Probiotics, Geschmacksverstärker, Geschmacksmaskierer, Antioxidantien und dergleichen.

### Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### Säureregulatoren

Die Nahrungsmittel können Carbonsäuren enthalten. Säuren im Sinne der Erfindung sind bevorzugt in Lebensmitteln zulässige Säuren, insbesondere die hier genannten:

| | |
|---|---|
| E 260 | - Essigsäure |
| E 270 | - Milchsäure |
| E 290 | - Kohlendioxid |
| E 296 | - Apfelsäure |
| E 297 | - Fumarsäure |
| E 330 | - Citronensäure |
| E 331 | - Natriumcitrat |
| E 332 | - Kaliumcitrat |
| E 333 | - Calciumcitrat |
| E 334 | - Weinsäure |
| E 335 | - Natriumtartrat |
| E 336 | - Kaliumtartrat |
| E 337 | - Natrium-Kaliumtartrat |
| E 338 | - Phosphorsäure |
| E 353 | - Metaweinsäure |
| E 354 | - Calciumtartrat |
| E 355 | - Adipinsäure |
| E 363 | - Bernsteinsäure |
| E 380 | - Triammoniumcitrat |
| E 513 | - Schwefelsäure |
| E 574 | - Gluconsäure |
| E 575 | - Glucono-delta-Lacton |

### Verdickungsmittel

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:

| | |
|---|---|
| E 170 | - Calciumcarbonat |
| E 260-263 | - Essigsäure und Acetate |
| E 270 | - Milchsäure |
| E 296 | - Äpfelsäure |
| E 297 | - Fumarsäure |
| E 325-327 | - Lactate (Milchsäure) |
| E 330-333 | - Citronensäure und Citrate |
| E 334-337 | - Weinsäure und Tartrate |
| E 339-341 | - Orthophosphate |
| E 350-352 | - Malate (Äpfelsäure) |
| E 450-452 | - Di-, Tri- und Polyphosphate |
| E 500-504 | - Carbonate (Kohlensäure) |
| E 507 | - Salzsäure und ChlorideE 513-517Schwefelsäure und Sulfate |
| E 524-528 | - Hydroxide |
| E 529-530 | - Oxide |
| E 355-357 | - Adipinsäure und Adipate |
| E 574-578 | - Gluconsäure und Gluconate |

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder Ionenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:

| | |
|---|---|
| E 400 | - Alginsäure |
| E 401 | - Natriumalginat |
| E 402 | - Kaliumalginat |
| E 403 | - Ammoniumalginat |
| E 404 | - Calciumalginat |
| E 405 | - Propylenglycolalginat |
| E 406 | - Agar Agar |
| E 407 | - Carrgeen, Furcelleran |
| E 407 | - Johannisbrotkernmehl |
| E 412 | - Guarkernmehl |
| E 413 | - Traganth |
| E 414 | - Gummi arabicum |
| E 415 | - Xanthan |
| E 416 | - Karaya (Indischer Traganth) |
| E 417 | - Tarakernmehl (Peruanisches Johannisbrotkernmehl) |
| E 418 | - Gellan |
| E 440 | - Pektin, Opekta |
| E 440ii | - Amidiertes Pektin |
| E 460 | - Mikrokristalline Cellulose, Cellulosepulver |
| E 461 | - Methylcellulose |
| E 462 | - Ethylcellulose |
| E 463 | - Hydroxypropylcellulose |
| E 465 | - Methylethylcellulose |
| E 466 | - Carboxymethylcellulose, Natriumcarboxymethylcellulose |

### Vitamine

In einer weiteren Ausführungsform der vorliegenden Erfindung können die Proteinmassen als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

### Prebiotische Stoffe

In einer weiteren Ausgestaltung der Erfindung können die Proteinmassen des Weiteren prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind.

**Fructo- und Glucooligosaccharide.** Fructo- bzw. Glucooligosaccharide oder abgekürzt FOS bzw. GOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Probiotische Mikroorganismen

Probiotische Mikroorganismen, auch als "Probiotics" bezeichnet, die die Gruppe (N) bilden, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, kapseln, Pulver und Sachets erhältlich, die die Mikroorganismen in gefriergetrockneter Form enthalten. Tabelle B gibt einen Überblick über handelsübliche Probiotics und den zugehörigen Auslobungen zur Gesundheit, die im Sinne der vorliegenden Erfindung als Komponente (b1) eingesetzt werden können.

**Tabelle A:**

| Probiotische Stoffe | | | |
|---|---|---|---|
| **Stamm** | **Bezeichnung** | **Hersteller** | **Auslobung** |
| *Bacillus coagulans* GBI-30, 6086 | GanedenBC | Ganeden Biotech | Steigert die Immunantwort bei viraler Infektion |
| *Bifidobacterium animalis* subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infantis* 35624 | Align | Procter & Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden |
| *Lactobacillus paracasei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus plantarum* 299v | GoodBelly/ Pro-Viva/ProbiMage | Probi | Könnte IBS Symptome verbessern; jedoch noch mehr Studien erforderlich. |

| **Stamm** | **Bezeichnung** | **Hersteller** | **Auslobung** |
|---|---|---|---|
| *Lactobacillus reuteri* American Type Culture Collection \| ATTC 55730 (*Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 & *Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei* 8700:2 | Bravo Friscus/ ProbiFrisk | Probi | Derzeit laufen Untersuchungen zur Wirksamkeit gegen Erkältungserkrankungen. |

Im Folgenden werden zwei weiteren Formen von Milchsäurebakterien genannt, die ebenfalls als Probiotics eingesetzt werden können:
- *Lactobacillus bulgaricus;*
- *Streptococcus thermophilus;*

Auch spezielle fermentierte Produkte auf Basis solcher Milchsäurebakterien sind einsetzbar:
- Mixed Pickles
- Fermentierte Bohnenpasten, wie z.B. tempeh, miso und doenjang;
- Kefir;
- Buttermilch
- Kimchi;
- Pao cai;
- Sojasoße;
- Zha cai.

### Geschmacksverstärker

Diese erfindungsgemäßen Proteinmassen können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines angenehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

### Wirkstoffe zur Maskierung von unangenehmen Geschmackseindrücken

Weiterhin können die oralen Zubereitungen auch weitere Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotiden (z.B. Adenosin-5'-monophosphat, Cytidin-5'-monophosphat) oder deren physiologisch akzeptablen Salzen, Lactisolen, Natriumsalzen (z.B. Natriumchlorid, Natriumlactat, Natriumcitrat, Natriumacetat, Natriumgluconoat), Hydroxyflavanonen, dabei bevorzugt Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamiden, dabei vorzugsweise 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxy-benzyl)amid-Mono-natriumsalz, 2,4-Dihydroxybenzoesäure-*N*-2-(4-hydroxy-3-methoxy-phenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamiden (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von Molkeproteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1955601 A1 beschrieben, die hinsichtlich dieser Verbindungen auf dem Wege der Verweisung Bestandteil dieser Anmeldung wird, oder Extrakten aus *Rubus suavissimus,* Extrakte aus *Hydrangea macrophylla* wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propy-Igallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E450c Dikaliumdiphosphat, E 450d Trikaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

Die Aroma- und Farbstoffe sowie die weiteren Nahrungsmittelzusatzstoffe können in den Proteinmassen in Mengen von 0,1 bis 10 Gew.-%, vorzugsweise von 0,5 bis 5 Gew.-% und insbesondere von 1 bis 3 Gew.-% enthalten sein.

### VORRICHTUNGEN ZUR DURCHFÜHRUNG DES VERFAHRENS

Die erfindungsgemäßen Proteinmassen können beispielsweise in einem Vakuumgarer, einem Thermomix oder einem Druckkochtopf hergestellt werden. In gleicher Weise kann das erfindungsgemäße Verfahren in diesen Vorrichtungen durchgeführt werden.

### Vakuumgarer

In einer ersten bevorzugten Ausführungsform wir Schritt (a) der vorliegenden Erfindung in einem Vakuumgarer ("sous vide Garer") durchgeführt. Diese Vorrichtungen erlauben es, Nahrungsmittel bei relativ niedrigen Temperaturen zu garen. Das Vakuumgaren erfolgt als Variante des Niedrigtemperaturgarens aufgrund des höheren Wärmeaustausches im Vergleich zu einem Backofen meistens in einem Wasserbad. Im Sinne der vorliegenden Erfindung werden die Zubereitungen in einen Vakuumbeutel eingeschweißt und dann bei konstanter Wassertemperatur im Bereich von 50 bis 85°C zubereitet. Hierbei kommen zur Überwachung der Kerntemperatur des Garguts kurze Thermometer (mit dem Gargut eingeschweißt) oder Infrarotthermometer zur Anwendung. Die Vakuumbeutel werden üblicherweise aus mehreren Schichte von Polyamiden und Polyethylen gefertigt, um eine Extraktion von Weichmachern aus der Folie des Beutels in das Gargut zu vermeiden. Alternativ gibt es auch Einbaudampfgargeräte (Kombi-Steamer), die über ein spezielles *Sous Vide*-Programm verfügen. In diesem Fall wird der Beutel direkt in den Dampfgarer gelegt und der Inhalt gradgenau mit Dampf gegart. Vorteile des Vakuumgarens liegen darin, dass durch das Vakuumieren nichts aus dem Beutel austreten kann, weder flüchtige Geschmackstoffe oder Aromen noch Wasser. Durch die Entfernung des größten Anteils an Luft im Beutel wird auch eine Oxidation des Garguts und seiner Aromen vermindert.

### Thermomixgerät

In einer weiteren bevorzugten Ausführungsform wird der Schritt (a) der vorliegenden Erfindung in einem so genannten Thermomixgerät durchgeführt. Ein Thermomix ist eine Multifunktions-Küchenmaschine der Wuppertaler Unternehmensgruppe Vorwerk, die in verschiedenen Modellen seit 1961 produziert wird. Der Thermomix hat zwölf Funktionen, er kann dampfgaren, rühren, wiegen, mixen, mahlen, kneten und zerkleinern. Das Kochen erfolgt in einem Mixtopf aus rostfreiem Edelstahl und mit einem Edelstahl-Messer. Dessen vier Klingen zerkleinern im Rechtslauf die Zutaten stufenweise mit bis zu 10.200 Umdrehungen pro Minute. Im Linkslauf werden Lebensmittel vermischt und gekocht, ohne diese zu zerkleinern. Angetrieben wird der Thermomix in der Regel von einem Reluktanzmotor.

Genauer gesagt handelt es sich bei dem Thermomix, mit dessen Hilfe die erfindungsgemäße Proteinmasse hergestellt werden kann, um eine elektrisch betriebene Küchenmaschine mit einem Gargefäß, wobei das dieses unmittelbar und/oder das in dem Gargefäß befindliche Gargut mittelbar aufheizbar ist, wobei weiter die Zubereitung des Garguts durch eine vorgegebene Wärmebeaufschlagung über eine vorgegebene Zeit erfolgt, zum Aufheizen und gegebenenfalls Garen und/oder Warmhalten des Garguts, wobei zudem insbesondere im Bodenbereich des Gargefäßes eine Temperaturüberwachung im Hinblick auf eine Garguttemperatur vorgesehen ist, dadurch gekennzeichnet, dass die Wärmebeaufschlagung unter Berücksichtigung gemessener Temperaturen des Garguts überwachbar und die Zeit der Wärmebeaufschlagung gegebenenfalls abweichend von der vorgegebenen Zeit der Wärmebeaufschlagung anpassbar ist. Eine solche Vorrichtung ist beispielsweise Gegenstand der Deutschen Patentanmeldung DE 10 20010 037 769 A1 (VORWERK). Die Herstellung der erfindungsgemäßen Proteinmassen kann auch mittels Dampfgaren in einem Thermomix mit Aufsatz nach dem Varoma-Verfahren durchgeführt werden.

Thermomixgeräte weisen dabei den Vorteil auf, dass die Schritte (b) und (c) gemeinsam durchgeführt werden können.

### Druckkochtopf

In einer weiteren bevorzugten Ausführungsform wird Schritt (a) der vorliegenden Erfindung in einem Druckkochtopf durchgeführt. Der Druckkochtopf auch Schnellkochtopf, Dampfkochtopf oder Papinsche Topf oder Kelomat ist ein Kochtopf, in dem Lebensmittel bei höheren Temperaturen als der Normalsiedetemperatur (bei Wasser 100 °C auf Meereshöhe) gegart werden können, wodurch sich die Kochzeit verkürzt. Die Erhöhung des Siedepunkts wird dadurch ermöglicht, dass sich im druckfest verschlossenen Topf ein erhöhter Druck aufbauen kann. Der Druckkochtopf ist im Grunde ein dickwandiger Kochtopf, dessen Öffnung einen nach außen gebogenen Rand mit bajonettartigen Aussparungen zur druckfesten Aufnahme des Deckels besitzt. Der Deckel hat eine Gummiringdichtung und üblicherweise sowohl ein Regelventil als auch ein Sicherheitsventil zur Begrenzung des Drucks. Moderne Schnellkochtöpfe haben fest in den Deckel integrierte Ventile, bei älteren waren sie eingeschraubt. Das Regelventil besitzt meistens einen druckabhängig aufsteigenden Stift mit Ringmarkierungen zur Druckanzeige. Das Ventil ist heutzutage mit der Deckelverriegelung gekoppelt, so dass der Topf zur Unfallvermeidung nur drucklos geöffnet werden kann. Für die Drucktöpfe gibt es gelochte und ungelochte Einsätze zum Garen von Gerichten, die dadurch nicht mit dem noch flüssigen Kochwasser in Berührung kommen, sondern im Dampf gegart werden. Im Sinne der vorliegenden Erfindung sind solche Bauteile bevorzugt.

Beim Druckkochtopf ist das eigentliche Kochgefäß in der Regel über einen Verschlussmechanismus (Bajonett- oder Druckverschluss) mit dem Deckel und einer Dichtung luft- und wasserdicht verschlossen. Durch den daraus folgenden Wasserdampfdruck ist es möglich, eine höhere Temperatur als normal zum Kochen zu erreichen und dadurch die Garzeiten zu verkürzen. Üblicherweise herrscht bei Betrieb im Topf etwa 1,8 bar Absolut-Druck, d. h. 0,8 bar Überdruck; das ist nicht besonders viel, erhöht jedoch die Siedetemperatur des Kochwassers auf etwa 116 °C.

Die folgenden Beispiele dienen dazu die Erfindung näher zu illustrieren, ohne sie auf deren Inhalt einzuschränken.

### BEISPIELE

### Beispiel 1

1 kg handelsüblicher Magerquark wurde in einem Rotationsverdampfer bei einer Temperatur von 50 °C und einem Druck von 200 mbar über einen Zeitraum von 2 Stunden bis zur Gewichtskonstanz entwässert; das Trocknungsprodukt wies eine Restfeuchte von 1,7 Gew.-% auf. 250 g des Produktes wurden in den Mischtopf eines Thermomixgerät TM31 der Firma Vorwerk gefüllt und mit 20 g Paprikapulver, 2 g Sorbitanmonostearat, 2 g Zitronensäure, sowie 2 g Natriumalginat versetzt. Das Gerät wurde verschlossen und die Zerkleinerungs- und Mischfunktion für 2 Minuten betätigt. Anschließend wurden 300 ml Wasser hinzugegeben und die Mischung 10 Minuten bei 100 °C auf Stufe 2 gekocht. Es wurde eine blassrosa gefärbte Masse erhalten, die eine feine, leicht brüchige Käsetextur aufwies und einem Paprikafrischkäse ähnelte.

### Beispiel 2

1 kg handelsüblicher Magerquark wurde in einem Rotationsverdampfer bei einer Temperatur von 50 °C und einem Druck von 200 mbar über einen Zeitraum von 2 Stunden bis zur Gewichtskonstanz entwässert; das Trocknungsprodukt wies eine Restfeuchte von 1,7 Gew.-% auf. 250 g des Produktes wurden in den Mischtopf eines Thermomixgerät TM31 der Firma Vorwerk gefüllt und mit dem Inhalt von 5 handelsüblichen Fischaromapackungen a 25 g, 2 g Sorbitanmonostearat, 2 g Zitronensäure, 2 g Pektin sowie 0,4 g Brillantsäuregrün versetzt. Das Gerät wurde verschlossen und die Zerkleinerungs- und Mischfunktion für 2 Minuten betätigt. Anschließend wurden 200 ml Wasser hinzugegeben und die Mischung 12 Minuten bei 100 °C auf Stufe 2 gekocht. Es wurde eine leicht grün gefärbte Masse erhalten, die eine halbfeste Käsetextur aufwies und einen Geschmack aufwies, der Sushi ähnelte.

### Beispiel 3

Beispiel 2 wurde statt mit Quark mit einer gewichtsgleichen Menge an Sauermilch wiederholt, die Mischung jedoch für 15 Minuten im Thermomix gehalten. Es wurde eine grünlich gefärbte Masse erhalten, die eine halbfeste Käsetextur aufwies und einen Geschmack aufwies, der Sushi ähnelte.

### Beispiel 4

500 ml Joghurt wurden gefriergetrocknet und der Trockenrückstand, der noch eine Restfeuchte von 1 Gew.-% aufwies, mit 40 g einer Mischung aus getrockneten und fein gemahlenen Basilikum- und Oreganoblättern, 2 g Zitronensäure, 3 g Natriumalginat sowie 0,3 g Betaglucan intensiv vermischt und abermals zerkleinert. 250 g dieser Mischung wurden in einen Beutel abgefüllt, vakumiert und in einen Sous-vide Garer vom Typ Steba SV1 eingebracht. Anschließend wurde das Gerät auf eine Temperatur von 75 °C eingestellt und der Beutel dort für 80 Minuten belassen. Danach wurde eine körnige, an Frischkäse erinnernde Masse erhalten, die einen intensiven Kräutergeschmack aufwies.

### Beispiel 5

500 ml milder Kefir wurden in einem Rotationsverdampfer bei 60 °C und einem Druck von 100 mbar bis auf eine Restfeuchte von 1,7 Gew.-% entwässert. 200 g des Trockenrückstandes wurden zusammen mit 30 g gemahlenem Bocksklee, 10 g Walnüssen, 2 g Zitronensäure und 2 g Pektin in einen 3-I-Schnellkochtopf der Firma WMF gegeben und mit 120 g Wasser vermischt. Anschließend wurde die Mischung für 7 Minuten bei 100 °C und 3 bar gehalten. Es wurde eine körnige Masse mit intensiv nussigem Geschmack und einer deutlichen Käsetextur erhalten.

## Patentansprüche

1. Proteinmasse zur Verwendung als Käseersatzstoff, dadurch erhältlich, dass man
(a) Milchprodukte ausgewählt aus der Gruppe, die gebildet wird von Sauermilch, Dickmilch, Joghurt, Kefir, Quark oder Sauermolke bis auf eine Restfeuchte von 0,5 bis 5 Gew.-% entwässert,
(b) der so erhaltenen getrockneten Masse Aroma- und/oder Farbstoffe sowie gegebenenfalls weitere Nahrungsmittelzusatzstoffe zugibt und
(c) die so erhaltene Mischung mit Wasser oder Dampf bei 50 bis 150 °C aufquellen lässt.

2. Proteinmasse nach Anspruch 1, **dadurch gekennzeichnet, dass** sie als weitere Nahrungsmittelinhaltsstoffe Süßstoffe, Lebensmittelsäuren, Säureregulatoren, Verdickungsmittel, Prebiotics, Probiotics, Geschmacksverstärker, Geschmacksmaskierer und/oder Antioxidantien enthalten.

3. Proteinmasse nach den Ansprüchen 1 und/oder 3, **dadurch gekennzeichnet, dass** die Aroma- und Farbstoffe sowie gegebenenfalls die weiteren Zusatzstoffe in Mengen von 0,1 bis 10 Gew.-% enthalten sind.

4. Verfahren zur Herstellung einer Proteinmasse mit Käsetextur, bei dem man
(a) Milchprodukte ausgewählt aus der Gruppe, die gebildet wird von Sauermilch, Dickmilch, Joghurt, Kefir, Quark oder Sauermolke bis auf eine Restfeuchte von 0,5 bis 5 Gew.-% entwässert,
(b) der so erhaltenen getrockneten Masse Aroma- und/oder Farbstoffe sowie gegebenenfalls weitere Nahrungsmittelzusatzstoffe zugibt und
(c) die so erhaltene Mischung mit Wasser oder Dampf aufquellen lässt,
wobei der letzte Schritt bei Temperaturen im Bereich von 50 bis 150 °C erfolgt.

5. Verfahren nach Anspruch 4, **dadurch gekennzeichnet, dass** man die Ausgangsstoffe einer Vakuumtrocknung, Sprühtrocknung oder Gefriertrocknung unterwirft.

6. Verfahren nach mindestens einem der Ansprüche 4 bis 5, **dadurch gekennzeichnet, dass** Schritt (c) bei einem Druck im Bereich von 0,1 bis 1 bar erfolgt.

7. Verfahren nach mindestens einem der Ansprüche 4 bis 5, **dadurch gekennzeichnet, dass** Schritt (c) bei einem Druck im Bereich von 1 bis 5 bar erfolgt.

8. Verfahren nach mindestens einem der Ansprüche 4 bis 7, **dadurch gekennzeichnet, dass** Schritt (a) in einem Vakuumgarer durchgeführt wird.

9. Verfahren nach mindestens einem der Ansprüche 5 bis 8, **dadurch gekennzeichnet, dass** Schritt (a) in einem Thermomixgerät durchgeführt wird.

10. Verfahren nach mindestens einem der Ansprüche 4 bis 9, **dadurch gekennzeichnet, dass** Schritt (a) in einem Druckkochtopf durchgeführt wird.

11. Verfahren nach mindestens einem der Ansprüche 4 bis 10, **dadurch gekennzeichnet**, das die Schritt (b) und (c) gemeinsam in einem Thermomixgerät durchgeführt werden.

## Claims

1. A protein composition for use as cheese substitute, obtainable by
(a) dewatering milk products selected from the group consisting of soured milk, fermented milk, yoghurt, kefir, quark or acid whey to a residual moisture content of 0.5 to 5 wt. %,
(b) adding flavourings and/or colourings and also,optionally, further food additives to the dried composition thus obtained, and
(c) allowing the resulting mixture to swell with water or steam at temperatures from 50 to 150 °C.

2. Protein composition according to claim 1, wherein the further food additives are selected from the group consisting of sweeteners, food acids, acidity regulators, thickeners, prebiotics, probiotics, flavour enhancers, flavour-masking agents and/or antioxidants.

3. Protein composition according to claims 1 and/or 2, wherein the flavourings and colourings and also, optionally, the further additives are present in amounts of 0.1 to 10 wt. %.

4. A process for producing a protein composition with cheese texture, comprising the following steps:
(a) dewatering milk products selected from the group consisting of soured milk, fermented milk, yoghurt, kefir, quark or acid whey to a residual moisture content of 0.5 to 5 wt. %,
(b) adding flavourings and/or colouring and also, optionally, further food additives to the dried composition thus obtained, and
(c) allowing the resulting mixture to swell with water or steam,
wherein the last step takes place at temperatures in the range from 50 to 150 °C.

5. Process according to claim 4, wherein the starting materials are subjected to vacuum drying, spray drying or freeze drying.

6. Process according to at least one of claims 4 to 5, wherein the step (c) takes place at a pressure in the range from 0.1 to 1 bar.

7. Process according to at least one of claims 4 to 5, wherein the step (c) takes place at a pressure in the range from 1 to 5 bar.

8. Process according to at least one of claims 4 to 7, wherein step (a) is carried out in a sous-vide cooker.

9. Process according to at least one of claims 5 to 8, wherein step (a) is carried out in a Thermomix appliance.

10. Process according to at least one of claims 4 to 9, wherein step (a) is carried out in a pressure cooker.

11. Process according to at least one of claims 4 to 10, wherein the steps (b) and (c) are carried out together in a Thermomix appliance.

## Revendications

1. Masse protéinique destinée à être utilisée en tant que substitut de fromage, pouvant être obtenue en ce que
(a) des produits laitiers choisis dans le groupe formé par le lait aigre, le lait caillé, le yaourt, le kéfir, la caillebotte ou le lactosérum acide sont déshydratés jusqu'à une humidité résiduelle de 0,5 à 5 % en poids,
(b) des arômes et/ou des colorants, ainsi qu'éventuellement d'autres additifs alimentaires sont ajoutés à la masse sèche ainsi obtenue, et
(c) le mélange ainsi obtenu est laissé gonfler avec de l'eau ou de la vapeur d'eau à une température de 50 à 150 °C.

2. Masse protéinique selon la revendication 1, **caractérisée en ce qu'**elle contient en tant que constituants alimentaires supplémentaires des édulcorants, des acides alimentaires, des régulateurs d'acidité, des épaississants, des prébiotiques, des probiotiques, des exhausteurs de goût, des agents de masquage du goût et/ou des antioxydants.

3. Masse protéinique selon les revendications 1 et/ou 3, **caractérisée en ce que** les arômes et les colorants, ainsi qu'éventuellement les additifs supplémentaires sont contenus en quantités de 0,1 à 10 % en poids.

4. Procédé de fabrication d'une masse protéinique à texture de fromage, selon lequel
(a) des produits laitiers choisis dans le groupe formé par le lait aigre, le lait caillé, le yaourt, le kéfir, la caillebotte ou le lactosérum acide sont déshydratés jusqu'à une humidité résiduelle de 0,5 à 5 % en poids,
(b) des arômes et/ou des colorants, ainsi qu'éventuellement d'autres additifs alimentaires sont ajoutés à la masse sèche ainsi obtenue, et
(c) le mélange ainsi obtenu est laissé gonfler avec de l'eau ou de la vapeur d'eau,
la dernière étape ayant lieu à des températures dans la plage allant de 50 à 150 °C.

5. Procédé selon la revendication 4, **caractérisé en ce que** les matières premières sont soumises à un séchage sous vide, un séchage par pulvérisation ou une lyophilisation.

6. Procédé selon au moins l'une quelconque des revendications 4 à 5, **caractérisé en ce que** l'étape (c) a lieu à une pression dans la plage allant de 0,1 à 1 bar.

7. Procédé selon au moins l'une quelconque des revendications 4 à 5, **caractérisé en ce que** l'étape (c) a lieu à une pression dans la plage allant de 1 à 5 bar.

8. Procédé selon au moins l'une quelconque des revendications 4 à 7, **caractérisé en ce que** l'étape (a) est réalisée dans un cuiseur sous vide.

9. Procédé selon au moins l'une quelconque des revendications 5 à 8, **caractérisé en ce que** l'étape (a) est réalisée dans un appareil Thermomix.

10. Procédé selon au moins l'une quelconque des revendications 4 à 9, **caractérisé en ce que** l'étape (a) est réalisée dans une casserole à pression.

11. Procédé selon au moins l'une quelconque des revendications 4 à 10, **caractérisé en ce que** les étapes (b) et (c) sont réalisées ensemble dans un appareil Thermomix.
